(19) Europäisches Patentamt / European Patent Office / Office européen des brevets

(11) **EP 1 428 442 B1**

(12) **FASCICULE DE BREVET EUROPEEN**

(45) Date de publication et mention
de la délivrance du brevet:
**03.01.2007 Bulletin 2007/01**

(51) Int Cl.:
***A42C 2/00*** *(2006.01)*

(21) Numéro de dépôt: **03104458.9**

(22) Date de dépôt: **28.11.2003**

(54) **Procédé de determination de la compatibilité biomecanique d'un equipement de tete**

Verfahren zur Bestimmung von der biomechanischen Verträglichkeit einer auf dem Kopf zu tragenden Ausrüstung

Method for determining the biomechanical compatibility of a head equipment

(84) Etats contractants désignés:
**DE GB IT SE**

(30) Priorité: **13.12.2002 FR 0215843**

(43) Date de publication de la demande:
**16.06.2004 Bulletin 2004/25**

(73) Titulaire: **Thales**
**92526 Neuilly Sur Seine (FR)**

(72) Inventeurs:
• **BAUDOU, Joel**
**94117, ARCUEIL (FR)**
• **LEGER, Alain**
**94117, ARCUEIL (FR)**

(74) Mandataire: **Esselin, Sophie**
**Marks & Clerk France**
**31-33 Avenue Aristide Briand**
**94117 Arcueil Cedex (FR)**

(56) Documents cités:
WO-A-97/40716        DE-A- 2 618 587
DE-A- 19 704 774        FR-A- 2 750 578

• **PATENT ABSTRACTS OF JAPAN vol. 2000, no. 12, 3 janvier 2001 (2001-01-03) -& JP 2000 245888 A (MIZUNO CORP), 12 septembre 2000 (2000-09-12)**

**Description**

Le domaine de l'invention concerne l'ergonomie et la sécurité des équipements de tête comportant notamment des dispositifs de visualisation, destinés à être porté par un membre d'équipage d'aéronef.

L'utilisation de dispositifs de visualisation dits de visionique montés directement sur la tête de l'utilisateur et non pas sur la planche de bord présentent de nombreux avantages. Il est ainsi possible de suppléer la vision humaine lorsque les conditions d'éclairage ambiant deviennent insuffisantes par des dispositifs de vision nocturne à intensificateur de lumière. Il est également possible d'augmenter la vision naturelle de l'utilisateur par la présentation de symbologies ou d'images de synthèse.

Cependant, ces dispositifs qui comportent des sources d'images, des composants optiques, de la mécanique,... ont une masse qui n'est pas négligeable et accroissent de façon sensible la masse totale supportée par le rachis cervical. Cette charge supplémentaire engendre d'autant plus de contraintes que son centre de gravité est éloigné de celui de la tête. Les équipages d'aéronefs sont, de plus, soumis à des sollicitations mécaniques très importantes (vibrations, accélérations, chocs à l'éjection avion et à l'ouverture du parachute, crashs,...) qui multiplient encore les efforts supportés par le rachis cervical. Or, ce segment de la colonne vertébrale est connu pour sa relative fragilité en présence de fortes accélérations. Des risques de lésion aux conséquences éventuellement graves voire mortelles sont alors possibles.

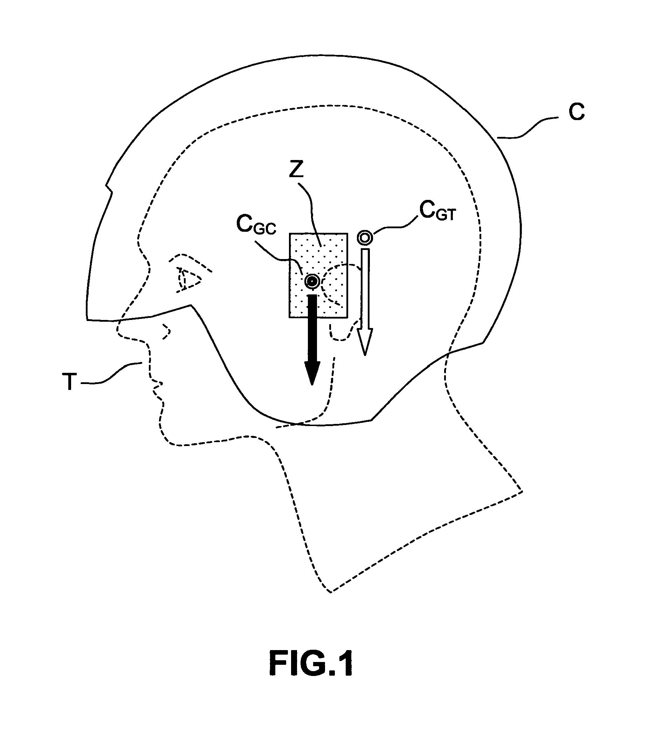

La conception de systèmes de visionique montés sur la tête de l'opérateur prend en compte ce type de risque en le réduisant à un niveau acceptable par l'application de règles et de recommandations générales visant à limiter la masse des équipements et positionner au mieux leur centre de gravité. La figure 1 illustre un exemple de ce type de recommandations. La tête T de l'utilisateur et l'équipement de tête C sont représentés en vue de profil, la tête est représentée en pointillés et le casque en traits pleins. Le centre de gravité $C_{GC}$ de l'équipement de tête est représenté par un rond noir et le centre de gravité $C_{GT}$ de la tête est représenté par un rond blanc. Les flèches blanches et noires représentent les masses respectives de la tête et de l'équipement de tête. Les recommandations spécifient notamment que le centre de gravité $C_{GC}$ doit être situé dans une zone Z représentée par le rectangle grisé, spécifiée par rapport au centre de gravité de la tête (Anthropometrie Relationships of body and body segment moments of inertia - Air Force Aerospace Medical Research Laboratory - J.T. McConville, Ints Kaleps - J.Cuzzi - Dec. 80).

La connaissance de la position du centre de gravité de la tête est donc importante pour les concepteurs d'équipements de tête.

Les caractéristiques des équipements sont bien déterminées et assez facilement calculables et mesurables. Les outils de CAO (Conception Assistée par Ordinateur) permettent de connaître, dès la conception, la masse prévisionnelle de l'équipement de casque ainsi que l'emplacement de son centre de gravité. Il est, par contre, beaucoup plus difficile de connaître précisément les caractéristiques mécaniques de la tête de l'utilisateur. Classiquement, on a recours à des modèles de tête dit « standard ». Cependant, ces modèles peuvent aboutir à des conclusions fausses au regard de particularités anatomiques de certains utilisateurs et donner ainsi un centre de gravité de la tête calculé éloigné du centre de gravité réel.

L'objet de l'invention est de pallier l'inconvénient d'utiliser une tête « standard » dont les paramètres biomécaniques peuvent être éloignés des paramètres de la tête réelle de l'utilisateur, en lui substituant un modèle numérique représentatif permettant de calculer plus précisément la position exacte du centre de gravité de la tête.

Plus précisément, l'invention a pour objet un procédé de détermination de la position du centre de gravité d'un équipement de tête porté par un utilisateur par rapport au centre de gravité de la tête dudit utilisateur, ledit équipement de tête comportant des équipements de visualisation, caractérisé en ce que ledit procédé comporte au moins les étapes suivantes :

- Détermination de la position du centre de gravité de l'équipement de tête dans un premier repère géométrique triaxial ;
- Détermination de la position du centre de gravité de la tête à partir d'un modèle numérique représentatif des données anatomiques de la tête dudit utilisateur, ledit centre de gravité de la tête étant repéré dans un second repère géométrique triaxial référencé par rapport au premier repère géométrique triaxial ;
- Détermination de la position du centre de gravité de l'équipement de tête dans ledit second repère géométrique triaxial.

L'invention sera mieux comprise et d'autres avantages apparaîtront à la lecture de la description qui va suivre donnée à titre non limitatif et grâce aux figures annexées parmi lesquelles :

- La figure 1 représente une vue de profil de l'équipement de tête de l'utilisateur et de sa tête.
- La figure 2 représente la position de points anatomiques représentatifs de la tête en vue de profil et en vue de face.
- La figure 3 représente la limite inférieure du volume de la tête délimitée par un plan de coupe.
- La figure 4 représente la limite inférieure du volume de la tête délimitée par deux plans de coupe.
- La figure 5 représente le maillage de la tête permettant de calculer son volume.

Les techniques modernes d'anthropométrie tridimensionnelle sont déjà utilisées pour la personnalisation des équipements de tête des équipages d'aéronef. On évite ainsi l'emploi sur l'équipement de tête de réglages mécaniques permettant de présenter l'image engendrée par les systèmes de visualisation devant les yeux de l'utilisateur, réglages qui compliqueraient et alourdiraient inutilement le casque support.

Une façon simple de mettre en oeuvre l'invention est d'utiliser ces techniques existantes pour calculer le centre de gravité de la tête de l'utilisateur. Dans ce cadre, le modèle numérique de base est une cartographie tridimensionnelle de la surface externe de la tête dudit utilisateur, les données anatomiques étant des points appartenant à ladite surface.

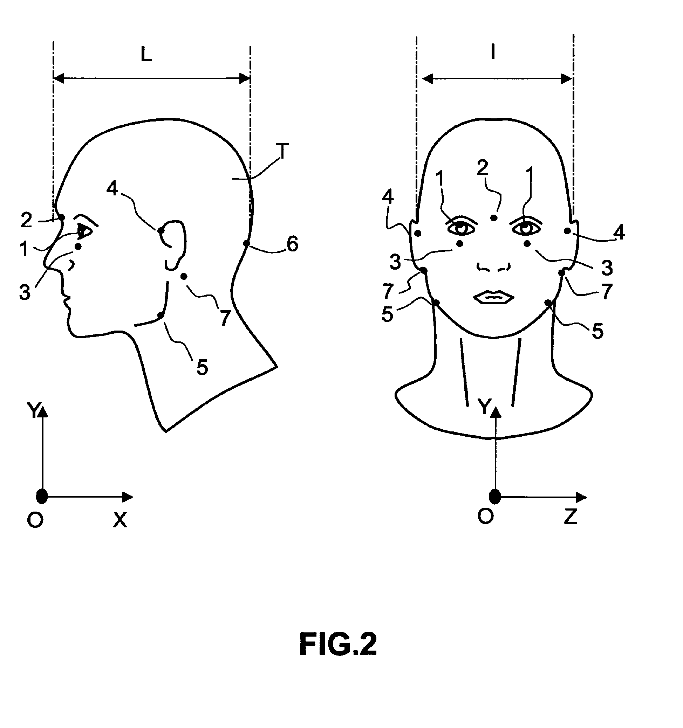

Un des points délicats de la réalisation de la cartographique est de définir un repère triaxial précis permettant de repérer parfaitement la tête afin que les centres de gravité de la tête et de l'équipement puissent être calculés dans le même repère. La façon la plus simple de procéder est de définir des points anthropométriques identifiables, lesdits points permettant de référencer la tête dans un second repère triaxial (O, X, Y, Z) qui est référencé par rapport au premier repère triaxial de l'équipement de tête. Comme indiqué sur la figure 2, les points anthropométriques sont généralement les tragus 4 droit et gauche ou les sous-orbitaires 3 droit et gauche ou les condyles occipitaux 7 droit et gauche ou le nasion 2 ainsi que les centres 1 des pupilles droite et gauche. Ces derniers points sont particulièrement utiles dans la mesure où ils constituent des références communes avec celles du système de visualisation de l'équipement de tête.

La réalisation de la cartographie tridimensionnelle se fait traditionnellement par des moyens optiques comme des caméras optiques ou des scanners optiques à balayage laser. Les points anthropométriques précédents sont repérés simplement par des marques ou des pastilles de couleur disposées sur la tête de l'utilisateur. A ces dispositifs, on peut adjoindre une caméra couleur permettant de visualiser la texture de la surface de la tête et de pointer les différents points anatomiques de la tête.

Lorsque la cartographie tridimensionnelle est effectuée, on calcule la position du centre $C_{GT}$ de gravité de la tête à partir de ladite cartographie. La position du centre de gravité peut être calculée à partir de celle du centre $C_{VT}$ du volume de la tête.

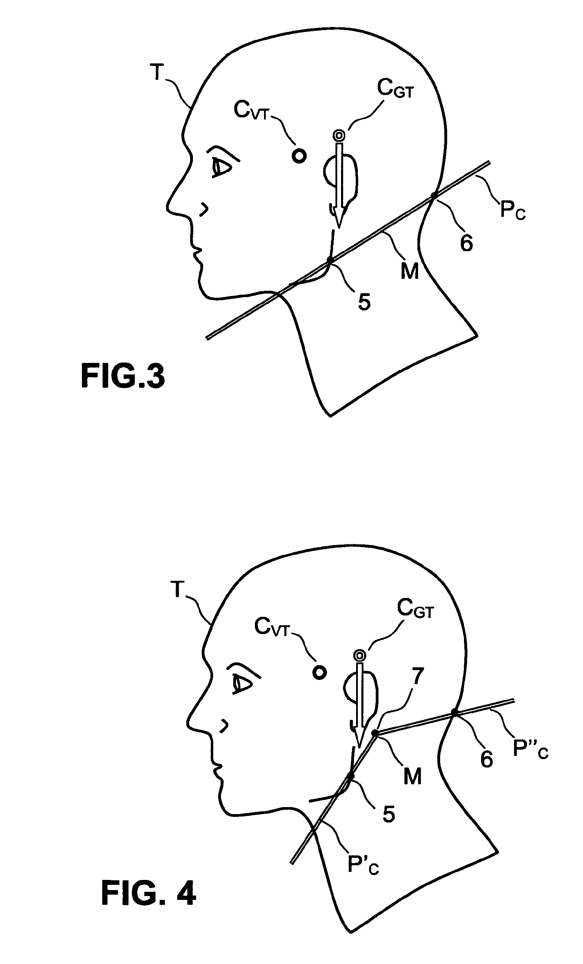

Parmi les procédés pour réaliser ce dernier calcul, il est possible de déterminer la position du centre du volume de la tête en appliquant un premier procédé dont les différentes étapes sont illustrées en figures 3, 4 et 5 et détaillées ci-dessous :

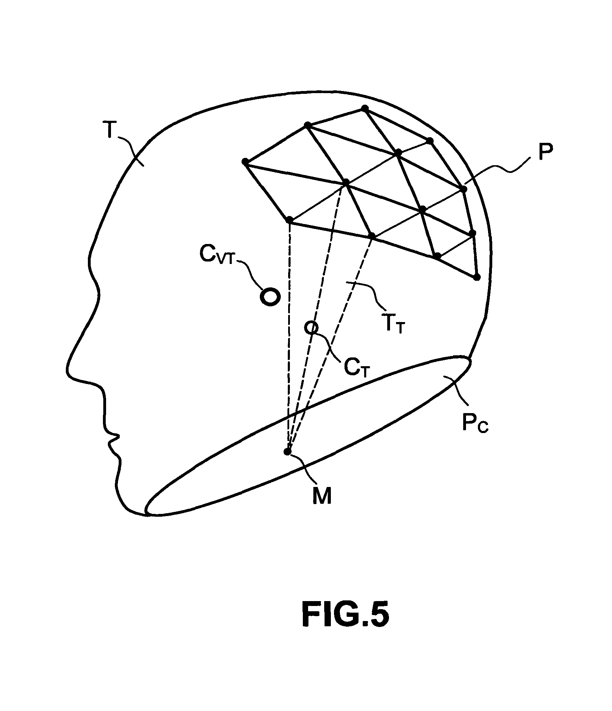

- Détermination d'au moins un plan de coupe $P_C$ limitant le volume de la tête au niveau du cou ;
- Détermination d'un point commun M situé dans ce plan de coupe $P_C$ ;
- Maillage des points P de la cartographique de la surface externe de la tête en triangles adjacents, les sommets de chaque triangle correspondant à un point P ;
- Découpage du volume de la tête en tétraèdres $T_T$ comme indiqué sur la figure 5, chaque tétraèdre $T_T$ comprenant les trois points P d'un triangle et le point commun M ;
- Calcul du volume élémentaire de chaque tétraèdre $T_T$ ;
- Calcul du centre du volume $C_T$ de chaque tétraèdre ;
- Calcul du volume total de la tête en additionnant les volumes élémentaires de tous les tétraèdres ;
- Calcul de la position du centre $C_{VT}$ du volume de la tête en calculant le barycentre des centres $C_T$ des volumes de tous les tétraèdres.

Ce premier procédé est bien adapté lorsque les points de la cartographie tridimensionnelle sont numérisés sous un format standard de type ASCII. Les calculs pour aboutir à la détermination du centre du volume de la tête sont alors une succession d'opérations élémentaires simples.

Il est cependant possible d'utiliser un second procédé pour déterminer la position du centre du volume de la tête. Les étapes de ce second procédé sont alors :

- Détermination d'au moins un plan de coupe $P_C$ limitant le volume de la tête au niveau du cou ;
- Création d'un objet numérique à partir des points de la cartographie de la tête et du plan de coupe, ledit objet numérique étant utilisable par un logiciel de conception Assisté par Ordinateur comme les logiciels EUCLID ou CATIA ;
- Calcul de la position du centre $C_{VT}$ du volume par ce logiciel.

Ce second procédé présente l'avantage de pouvoir utiliser le modèle numérique de tête comme un objet CAO. Il est possible ainsi de réaliser certaines simulations comme le positionnement de l'équipement de tête sur la tête de l'utilisateur.

Quelque soit le procédé retenu, le plan de coupe $P_C$ permettant de limiter la tête au niveau du cou peut être unique. Il est alors sensiblement déterminé par le gonion 5 gauche, le gonion 5 droit et l'inion 6 comme indiqué sur la figure 3.

La limitation de la tête au niveau du cou peut également être faite par la réunion de deux plans de coupe P'$_C$ et P"$_C$, le premier plan de coupe P'$_C$ permettant de limiter le volume de la tête vers l'avant, le second plan de coupe P"$_C$ permettant de limiter le volume de la tête vers l'arrière, le premier plan de coupe étant sensiblement déterminé par les gonions 5 gauche et droit et par les condyles occipitaux 7 droit et gauche, le second plan de coupe étant déterminé par les condyles occipitaux 7 droit et gauche et par l'inion 6. Dans ce cas, le point commun M appartient préférentiellement à l'intersection des deux plans de coupe P'$_C$ et P"$_C$ comme indiqué sur la figure 4.

Connaissant la position du centre du volume de la tête de l'utilisateur, on en déduit la position du centre de gravité de la tête dans le second repère triaxial de la tête en utilisant la formule suivante pour chacune des 3 coordonnées X$_{CGT}$, Y$_{CGT}$ et Z$_{CGT}$ du centre de gravité de la tête :

$$X_{CGT} = A_X . X_{CVT} + B_X . L + C_X . l + \ldots$$

$$Y_{CGT} = A_Y . Y_{CVT} + B_Y . L + C_Y . l + \ldots$$

$$Z_{CGT} = A_Z . Z_{CVT} + B_Z . L + C_Z . l + \ldots$$

Avec :

- X$_{CVT}$ , Y$_{CVT}$ et Z$_{CVT}$ coordonnées du centre du volume de la tête ;
- A$_X$ , B$_X$ , C$_X$ , ... étant des facteurs déterminés à partir de mesures précédemment effectuées sur des têtes humaines par des laboratoires de biomécanique et permettant d'établir une corrélation entre le centre de gravité et le centre de volume de la tête.
- L, l étant respectivement la longueur et la largeur de la tête de l'utilisateur comme indiqué sur la figure 2.

D'une façon plus générale, la position de chacune des trois coordonnées du centre de gravité de la tête dans le second repère triaxial est obtenue par la somme de produits de deux facteurs, le premier facteur étant une constante, le second facteur étant un paramètre anthropométrique de ladite tête.

Il est également possible de déterminer le centre de gravité de la tête en utilisant un modèle numérique donnant non seulement la cartographie tridimensionnelle de la tête, mais encore les caractéristiques volumétriques et densitométriques de ses différents constituants (os de la boîte cranienne, cerveau, cavités,...). Ces données sont obtenues, par exemple, par des moyens de tomodensitométrie RMN (Résonance Magnétique Nucléaire).

Lorsque le volume, la masse et la position du centre de gravité de la tête de l'utilisateur sont connus, on utilise ces données d'entrée dans des outils de simulation numérique biofidèles comme, par exemple, le logiciel PAM-SAFE de la société PAM SYSTEM permettant de créer un mannequin numérique représentatif de chaque utilisateur. En appliquant des sollicitations représentatives des conditions de vol sur ce mannequin numérique, on calcule le tenseur des efforts au niveau de l'interface entre la tête et le cou. En fonction de critères de lésions basés sur des niveaux d'efforts admissibles, on évalue alors le risque d'emploi d'un équipement de tête pour chaque utilisateur.

Le résultat de cette analyse est utilisable aux fins suivantes :

- Optimisation des caractéristiques ou de la position de l'équipement de tête lors de sa personnalisation afin de diminuer les risques de lésion.
- Détermination des limites d'emploi de l'équipement et adaptation de son domaine opérationnel.
- Détermination des paramètres de pilotage d'un siège éjectable ou d'amortissement d'un siège anti-crash adaptés aux caractéristiques propres à l'utilisateur
- Interdiction de vol pour les utilisateurs présentant des risques de lésion trop importants.

**Revendications**

1.   Procédé de détermination de la position du centre de gravité (C$_{GC}$) d'un équipement de tête (C) porté par un utilisateur par rapport au centre de gravité (C$_{GT}$) de la tête dudit utilisateur, ledit équipement de tête comportant des équipements de visualisation, **caractérisé en ce que** ledit procédé comporte au moins les étapes suivantes :

   • Détermination de la position du centre de gravité de l'équipement de tête dans un premier repère géométrique triaxial;

• Détermination de la position du centre de gravité de la tête à partir d'un modèle numérique représentatif des données anatomiques de la tête dudit utilisateur, ledit centre de gravité étant repéré dans un second repère géométrique triaxial référencé par rapport au premier repère géométrique triaxial;

• Détermination de la position du centre de gravité de l'équipement de tête dans ledit second repère géométrique triaxial.

**2.** Procédé selon la revendication 1, **caractérisé en ce que** le modèle numérique est une cartographie tridimensionnelle de la surface externe de la tête dudit utilisateur, les données anatomiques étant des points appartenant à ladite surface.

**3.** Procédé selon la revendication 2, **caractérisé en ce que** la cartographie tridimensionnelle comporte des points anthropométriques identifiables, lesdits points permettant de référencer la tête dans le premier repère géométrique triaxial de l'équipement de tête.

**4.** Procédé selon la revendication 3, **caractérisé en ce que** les points anthropométriques sont les tragus (4) droit et gauche ou les sous-orbitaires (3) droit et gauche ou les condyles occipitaux (7) ou le nasion (2) ainsi que les centres des pupilles (1) droite et gauche.

**5.** Procédé selon l'une des revendications 2 à 4, **caractérisé en ce que** les moyens de détermination des points de la cartographie tridimensionnelle sont des caméras optiques ou des scanners optiques à balayage laser.

**6.** Procédé selon l'une des revendications 2 à 5, **caractérisé en ce que** la détermination de la position du centre de gravité ($C_{GT}$) de la tête est obtenue à partir de la détermination de la position du centre du volume ($C_{VT}$) de ladite tête.

**7.** Procédé selon la revendication 6, **caractérisé en ce que** la détermination de la position du centre du volume ($C_{VT}$) de la tête comporte les étapes suivantes :

• Détermination d'au moins un plan de coupe ($P_C$) limitant le volume de la tête au niveau du cou ;
• Détermination d'un point commun (M) situé dans ce plan de coupe.
• Maillage des points (P) de la cartographique de la surface externe de la tête en triangles adjacents, les sommets de chaque triangle correspondant à un point (P) ;
• Découpage du volume de la tête en tétraèdres ($T_T$), chaque tétraèdre comprenant les trois points (P) d'un triangle et le point commun (M) ;
• Calcul du volume élémentaire de chaque tétraèdre ($T_T$);
• Calcul du centre du volume ($C_T$) de chaque tétraèdre ($T_T$);
• Calcul du volume total de la tête en additionnant les volumes élémentaires de tous les tétraèdres ($T_T$);
• Calcul de la position du centre du volume ($C_{VT}$) de la tête en calculant le barycentre des centres des volumes de tous les tétraèdres ($T_T$).

**8.** Procédé selon la revendication 6, **caractérisé en ce que** la détermination de la position du centre du volume ($C_{VT}$) de la tête comporte les étapes suivantes :

• Détermination d' au moins un plan de coupe ($P_C$) limitant le volume de la tête (T) au niveau du cou ;
• Création d'un objet numérique à partir des points de la cartographie de tête et du plan de coupe, ledit objet numérique étant utilisable par un logiciel de conception Assisté par Ordinateur ;
• Calcul de la position du centre de volume ($C_{VT}$) par ce logiciel.

**9.** Procédé selon les revendications 7 ou 8, **caractérisé en ce que** le plan de coupe ($P_C$) est unique et sensiblement déterminé par le gonion (5) gauche, le gonion (5) droit et l'inion (6).

**10.** Procédé selon les revendications 7 ou 8, **caractérisé en ce que** le volume de la tête est sensiblement limité par la réunion de deux plans de coupe ($P'_C$, $P''_C$ ), le premier plan de coupe ($P'_C$) permettant de limiter le volume de la tête vers l'avant, le second plan de coupe ($P''_C$) permettant de limiter le volume de la tête vers l'arrière, le premier plan de coupe ($P'_C$) étant sensiblement déterminé par les gonions (5) gauche et droit et par les condyles occipitaux (7) droit et gauche, le second plan de coupe étant déterminé par les condyles occipitaux (7) droit et gauche et par l'inion (6).

**11.** Procédé selon les revendications 7 ou 8, **caractérisé en ce que** la position de chacune des trois coordonnées du centre de gravité ($C_{GT}$) de la tête dans le repère triaxial est obtenue par la somme de produits de deux facteurs, le premier facteur étant une constante, le second facteur étant un paramètre anthropométrique de ladite tête.

**12.** Procédé selon la revendication 11, **caractérisé en ce que** le paramètre anthropométrique est la coordonnée prise sur le même axe du centre du volume ($C_{VT}$) de la tête ou la longueur de la tête ou la largeur de la tête.

**13.** Procédé selon la revendication 1, **caractérisé en ce que** le modèle numérique est un modèle volumétrique et densitométrique des différents constituants de la tête.

**14.** Procédé selon la revendication 13, **caractérisé en ce que** le modèle numérique est établi par des moyens de tomodensitométrie RMN (Résonance Magnétique Nucléaire).

**15.** Procédé d'évaluation du risque d'emploi d'un équipement de tête porté par un utilisateur en conditions opérationnelles, **caractérisé en ce que** ledit procédé comporte une étape de détermination de la position du centre de gravité ($C_{GC}$) de l'équipement de tête par rapport au centre de gravité de la tête ($C_{GT}$) de l'utilisateur réalisée selon l'une des revendications précédentes.

**16.** Procédé de réalisation d'un mannequin numérique simulant un utilisateur comportant au moins un équipement de tête, **caractérisé en ce que** ledit procédé comporte une étape de détermination de la position du centre de gravité ($C_{GC}$) de l'équipement de tête par rapport au centre de gravité de la tête ($C_{GT}$) de l'utilisateur réalisée selon l'une des revendications 1 à 14.

**Claims**

**1.** Method of determining the position of the centre of gravity ($C_{GC}$) of a helmet (C) worn by a user, relative to the centre of gravity ($C_{GT}$) of the head of said user, said helmet including display equipment, **characterized in that** said method comprises at least the following steps:

. determination of the position of the centre of gravity of the helmet in a first triaxial geometrical frame of reference;
. determination of the position of the centre of gravity of the head based on a digital model representative of the anatomical data of the head of said user, said centre of gravity being located in a second triaxial geometrical frame of reference referenced relative to the first triaxial geometrical frame of reference;
. determination of the position of the centre of gravity of the helmet in said second triaxial geometrical frame of reference.

**2.** Method according to Claim 1, **characterized in that** the digital model is a three-dimensional map of the outer surface of the head of said user, the anatomical data being points belonging to said surface.

**3.** Method according to Claim 2, **characterized in that** the three-dimensional map comprises identifiable anthropometric points, said points making it possible to reference the head in the first triaxial geometrical frame of reference of the helmet.

**4.** Method according to Claim 3, **characterized in that** the anthropometric points are the left and right traguses (4) or the left and right infra-orbitals (3) or the occipital condyles (7) or the nasion (2), and the centres of the right and left pupils (1).

**5.** Method according to one of Claims 2 to 4, **characterized in that** the means of determining the points of the three-dimensional map are optical cameras or optical scanners with laser scanning.

**6.** Method according to one of Claims 2 to 5, **characterized in that** the determination of the position of the centre of gravity ($C_{GT}$) of the head is obtained from the determination of the position of the centre of the volume ($C_{VT}$) of said head.

**7.** Method according to Claim 6, **characterized in that** the determination of the position of the centre of the volume ($C_{VT}$) of the head comprises the following steps:

. determination of at least one planigraphic plane (P$_C$) limiting the volume of the head at the neck level;

. determination of a common point (M) located in this planigraphic plane;

. meshing of the points (P) of the map of the outer surface of the head in adjacent triangles, the points of each triangle corresponding to a point (P);

. subdivision of the volume of the head into tetrahedra (T$_T$), each tetrahedron comprising the three points (P) of a triangle and the common point (M);

. calculation of the basic volume of each tetrahedron (T$_T$);

. calculation of the centre of the volume (C$_T$) of each tetrahedron (T$_T$);

. calculation of the total volume of the head by adding up the basic volumes of all the tetrahedra (T$_T$);

. calculation of the position of the centre of the volume (C$_{VT}$) of the head by calculating the baric centre of the centres of the volumes of all the tetrahedra (T$_T$) .

8. Method according to Claim 6, **characterized in that** the determination of the position of the centre of the volume (C$_{VT}$) of the head comprises the following steps:

. determination of at least one planigraphic plane (P$_C$) limiting the volume of the head (T) at the neck level;

. creation of a digital object based on the points of the map of the head and the planigraphic plane, said digital object being usable by computer-aided design software;

. calculation of the position of the centre of volume (C$_{VT}$) by this software.

9. Method according to Claim 7 or 8, **characterized in that** the planigraphic plane (P$_C$) is unique and roughly determined by the left gonion (5), the right gonion (5) and the inion (6).

10. Method according to Claim 7 or 8, **characterized in that** the volume of the head is roughly limited by the intersection of two planigraphic planes (P'$_C$, P''$_C$), the first planigraphic plane (P''$_C$) being used to limit the volume of the head towards the front, the second planigraphic plane (P'$_C$) being used to limit the volume of the head towards the rear, the first planigraphic plane (P'$_C$) being roughly determined by the left and right gonions (5) and by the right and left occipital condyles (7), the second planigraphic plane being determined by the right and left occipital condyles (7) and by the inion (6).

11. Method according to Claim 7 or 8, **characterized in that** the position of each of the three coordinates of the centre of gravity (C$_{GT}$) of the head in the triaxial frame of reference is obtained by the sum of the products of two factors, the first factor being a constant, the second factor being an anthropometric parameter of said head.

12. Method according to Claim 11, **characterized in that** the anthropometric parameter is the coordinate taken from the same axis of the centre of the volume (C$_{VT}$) of the head or the length of the head or the width of the head.

13. Method according to Claim 1, **characterized in that** the digital model is a volumetric and densitometric model of the various components of the head.

14. Method according to Claim 13, **characterized in that** the digital model is prepared by NMR (nuclear magnetic resonance) tomodensitometric means.

15. Method of assessing the risk of using a helmet worn by a user in operational conditions, **characterized in that** said method comprises a step for determining the position of the centre of gravity (C$_{GC}$) of the helmet relative to the centre of gravity of the head (C$_{GT}$) of the user carried out according to one of the preceding claims.

16. Method of implementing a digital model simulating a user comprising at least one helmet, **characterized in that** said method comprises a step for determining the position of the centre of gravity (C$_{GC}$) of the helmet relative to the centre of gravity of the head (C$_{GT}$) of the user produced according to one of Claims 1 to 14.

**Patentansprüche**

1. Verfahren zur Bestimmung des Schwerpunkts (C$_{GC}$) einer von einem Benutzer getragenen Kopfausrüstung (C) bezüglich des Schwerpunkts (C$_{GT}$) des Kopfes des Benutzers, wobei die Kopfausrüstung Anzeigegeräte aufweist, **dadurch gekennzeichnet, dass** das Verfahren mindestens die folgenden Schritte aufweist:

• Bestimmung der Position des Schwerpunkts der Kopfausrüstung in einem ersten dreiachsigen geometrischen Koordinatensystem;
• Bestimmung der Position des Schwerpunkts des Kopfes ausgehend von einem digitalen Modell, das für die anatomischen Daten des Kopfes des Benutzers repräsentativ ist, wobei der Schwerpunkt in einem zweiten dreiachsigen geometrischen Koordinatensystem festgelegt ist, das bezüglich des ersten dreiachsigen geometrischen Koordinatensystems **gekennzeichnet** ist;
• Bestimmung der Position des Schwerpunkts der Kopfausrüstung im zweiten dreiachsigen geometrischen Koordinatensystem.

2. Verfahren nach Anspruch 1, **dadurch gekennzeichnet, dass** das digitale Modell eine dreidimensionale Kartographie der Außenfläche des Kopfes des Benutzers ist, wobei die anatomischen Daten zu der Fläche gehörende Punkte sind.

3. Verfahren nach Anspruch 2, **dadurch gekennzeichnet, dass** die dreidimensionale Kartographie identifizierbare anthropometrische Punkte aufweist, wobei die Punkte es ermöglichen, den Kopf im ersten dreiachsigen geometrischen Koordinatensystem der Kopfausrüstung zu kennzeichnen.

4. Verfahren nach Anspruch 3, **dadurch gekennzeichnet, dass** die anthropometrischen Punkte der rechte und linke Tragus (4) oder der rechte und linke infraorbitale Bereich (3) oder die occipitalen Kondylen (7) oder der Nasenwurzelpunkt (2) sowie die Zentren der rechten und linken Pupille (1) sind.

5. Verfahren nach einem der Ansprüche 2 bis 4, **dadurch gekennzeichnet, dass** die Mittel zur Bestimmung der Punkte der dreidimensionalen Kartographie optische Kameras oder optische Scanner mit Laserabtastung sind.

6. Verfahren nach einem der Ansprüche 2 bis 5, **dadurch gekennzeichnet, dass** die Positionsbestimmung des Schwerpunkts ($C_{GT}$) des Kopfes ausgehend von der Bestimmung der Position des Zentrums des Volumens ($C_{VT}$) des Kopfes erhalten wird.

7. Verfahren nach Anspruch 6, **dadurch gekennzeichnet, dass** die Bestimmung der Position des Zentrums des Volumens ($C_{VT}$) des Kopfes die folgenden Schritte aufweist:

• Bestimmung mindestens einer Schnittebene ($P_C$), die das Volumen des Kopfes in Höhe des Halses begrenzt;
• Bestimmung eines gemeinsamen Punktes (M), der sich in dieser Schnittebene befindet;
• Vernetzung der Punkte (P) der Kartographie der Außenfläche des Kopfes in aneinandergrenzende Dreiecke, wobei die Spitzen jedes Dreiecks einem Punkt (P) entsprechen;
• Zerschneiden des Volumens des Kopfes in Tetraeder ($T_T$), wobei jedes Tetraeder die drei Punkte (P) eines Dreiecks und den gemeinsamen Punkt (M) enthält;
• Berechnen des Elementarvolumens jedes Tetraeders ($T_T$);
• Berechnen des Zentrums des Volumens ($C_T$) jedes Tetraeders ($T_T$);
• Berechnen des Gesamtvolumens des Kopfes durch Addieren der Elementarvolumen aller Tetraeder ($T_T$);
• Berechnen der Position des Zentrums des Volumens ($C_{VT}$) des Kopfes durch Berechnen des Baryzentrums der Zentren der Volumen aller Tetraeder ($T_T$) .

8. Verfahren nach Anspruch 6, **dadurch gekennzeichnet, dass** die Bestimmung der Position des Zentrums des Volumens ($C_{VT}$) des Kopfes die folgenden Schritte aufweist:

• Bestimmung mindestens einer Schnittebene ($P_C$), die das Volumen des Kopfes (T) in Höhe des Halses begrenzt;
• Erzeugung eines digitalen Objekts ausgehend von Punkten der Kopf-Kartographie und von der Schnittebene, wobei das digitale Objekt von einer rechnergestützten Gestaltungssoftware verwendet werden kann;
• Berechnung der Position des Zentrums des Volumens ($C_{VT}$) durch diese Software.

9. Verfahren nach den Ansprüchen 7 oder 8, **dadurch gekennzeichnet, dass** die Schnittebene ($P_C$) einzig ist und im Wesentlichen durch den linken Gonion (5), den rechten Gonion (5) und den Inion (6) bestimmt wird.

10. Verfahren nach den Ansprüchen 7 oder 8, **dadurch gekennzeichnet, dass** das Volumen des Kopfes im Wesentlichen durch die Verbindung von zwei Schnittebenen ($P'_C$, $P''_C$) begrenzt wird, wobei die erste Schnittebene ($P'_C$) es ermöglicht, das Volumen des Kopfes nach vorne zu begrenzen, während die zweite Schnittebene ($P''_C$) es ermöglicht, das Volumen des Kopfes nach hinten zu begrenzen, wobei die erste Schnittebene (P'$_C$) im Wesentlichen vom linken und rechten Gonion (5) und vom rechten und linken occipitalen Kondyl (7) bestimmt wird, während die zweite Schnittebene vom rechten und linken occipitalen Kondyl (7) und vom Inion (6) bestimmt wird.

**11.** Verfahren nach den Ansprüchen 7 oder 8, **dadurch gekennzeichnet, dass** die Position jeder der drei Koordinaten des Schwerpunkts (C$_{GT}$) des Kopfes im dreiachsigen Koordinatensystem durch die Summe von Produkten von zwei Faktoren erhalten wird, wobei der erste Faktor eine Konstante ist, während der zweite Faktor ein anthropometrischer Parameter des Kopfes ist.

**12.** Verfahren nach Anspruch 11, **dadurch gekennzeichnet, dass** der anthropometrische Parameter die Koordinate, die auf der gleichen Achse des Zentrums des Volumens (C$_{VT}$) des Kopfes genommen wird, oder die Länge des Kopfes oder die Breite des Kopfes ist.

**13.** Verfahren nach Anspruch 1, **dadurch gekennzeichnet, dass** das digitale Modell ein volumetrisches und densitometrisches Modell der verschiedenen Bestandteile des Kopfes ist.

**14.** Verfahren nach Anspruch 13, **dadurch gekennzeichnet, dass** das digitale Modell von tomodensitometrischen Mitteln NMR (magnetische Kernresonanz) erstellt wird.

**15.** Verfahren zur Abschätzung der Benutzungsgefahr einer von einem Benutzer getragenen Kopfausrüstung unter Betriebsbedingungen, **dadurch gekennzeichnet, dass** das Verfahren einen Schritt der Bestimmung der Position des Schwerpunkts (C$_{GC}$) der Kopfausrüstung bezüglich des Schwerpunkts des Kopfes (C$_{GT}$) des Benutzers aufweist, der gemäß einem der vorhergehenden Ansprüche durchgeführt wird.

**16.** Verfahren zur Herstellung einer einen Benutzer simulierenden Testpuppe, die mindestens eine Kopfausrüstung aufweist, **dadurch gekennzeichnet, dass** das Verfahren einen Schritt der Bestimmung der Position des Schwerpunkts (C$_{GC}$) der Kopfausrüstung bezüglich des Schwerpunkts des Kopfes (C$_{GT}$) des Benutzers aufweist, der gemäß einem der Ansprüche 1 bis 14 durchgeführt wird.

**FIG.1**

**FIG.2**

**FIG.3**

**FIG. 4**

**FIG.5**